# EUROPÄISCHE PATENTSCHRIFT

(11) **EP 0 884 126 B1**
(45) Veröffentlichungstag und Bekanntmachung des Hinweises auf die Patenterteilung: **16.04.2003**
(21) Anmeldenummer: 98110540.6
(22) Anmeldetag: 09.06.1998
(51) Int. Cl.: B23K 9/028, B23K 9/12

(54) **Verfahren für das Lichtbogenschweissen einer vertikal orientierten in sich geschlossenen Naht mit zweidimensionalem Verlauf, insbesondere für Rundnähte molchbarer Rohrleitungen**
Method for arc welding a closed two dimensional seam in a vertical plane, in particular for welding pipes adapted to be cleaned using a pig
Méthode pour souder par arc un joint circonscrit dans un plan vertical, en particulier un joint pour tubes adaptés à être nettoyés avec un racleur

(30) Priorität: 10.06.1997 DE 19724434
(43) Veröffentlichungstag der Anmeldung: 16.12.1998
(73) Patentinhaber: Kalberg, Friedel Paul, 22885 Barsbüttel (DE)
(72) Erfinder: Kalberg, Friedel Paul, 22885 Barsbüttel (DE)

(56) Entgegenhaltungen:
- NL-A- 8 003 720
- US-A- 4 645 902
- PATENT ABSTRACTS OF JAPAN vol. 010, no. 002 (M-444), 8. Januar 1986 -& JP 60 166169 A (HITACHI SEISAKUSHO KK), 29. August 1985
- PATENT ABSTRACTS OF JAPAN vol. 096, no. 005, 31. Mai 1996 -& JP 08 025050 A (TOKYO GAS CO LTD;OTHERS: 04), 30. Januar 1996

## Beschreibung

Die Erfindung betrifft ein Verfahren für das Lichtbogenschweißen einer vertikal orientierten in sich geschlossenen Naht mit zweidimensionalem Verlauf, insbesondere für Rundnähte molchbarer Rohrleitungen, unter Verwendung von Schutzgas und nichtabschmelzender Elektrode und ohne Verwendung von Zusatzwerkstoff, bei dem die Naht aus zwei Steignähten hergestellt wird, die im Bereich des tiefsten Punkts der Naht beginnen und im Bereich des höchsten Punkts der Naht sich überlappen.

Das Lichtbogenschweißen für eine vertikal orientierte in sich geschlossene Naht mit zweidimensionalem Verlauf unter Verwendung von Schutzgas und nicht abschmelzender Elektrode und ohne Verwendung von Zusatzwerkstoff findet Anwendung bei sogenannten Orbitalschweißvorrichtungen. Letztere eignen sich in Verbindung mit dem vorgenannten Lichtbogenschweißen zum Schweißen von Rohrverbindungen bis zu Wandstärken von etwa 4 mm, wobei die Rohrnaht umlaufend geschweißt wird.

Insbesondere für molchbare Rohrleitungen ist die Ausführung der geschweißten Verbindungsstellen von entscheidender Bedeutung für die Funktionsfähigkeit und Lebensdauer des Molches. Durchhängende Schweißnahtwurzeln stellen erhöhte Widerstände für den in der Rohrleitung unter einer bestimmten radialen Vorspannung stehenden Molch dar, die zu schwankenden und auf das Gesamtsystem sich nachteilig auswirkenden Treibdrücken führen. Ein Durchhängen der Schweißnahtwurzel ist daher bei molchbaren Rohrleitungen in jedem Falle zu vermeiden.

Bislang wird für derartige Anwendungen die Schweißnaht sektionsweise, beispielsweise durch Aufteilung in sechs Sektoren, hergestellt, wobei den einzelnen Sektoren in Abhängigkeit von der jeweiligen Schweißlage jeweils ein bestimmter Schweißstrom zugeordnet ist und diese Ströme zeitabhängig gesteuert werden. Darüber hinaus ist es bekannt, neben dem Schweißstrom unter anderem auch die Schweißgeschwindigkeit, und die Zufuhrgeschwindigkeit des Zusatzwerkstoffes in Abhängigkeit von einer Vielzahl von über den Umfang des Rohres verteilten Bereichen zu speichern und eine automatisch arbeitende Schweißvorrichtung mit den diesbezüglichen Schweißdaten zu steuern (**US 4 144 992 A**).

Das bekannte Verfahren, bei dem den einzelnen Sektoren in Abhängigkeit von der jeweiligen Schweißlage jeweils ein bestimmter Schweißstrom zugeordnet ist und diese Ströme zeitabhängig gesteuert werden, ist insbesondere in seiner Durchführung kompliziert, es erfordert ein millimetergenaues Justieren der miteinander zu verschweißenden Rohrenden im Zusammenwirken mit dem Schweißwerkzeug, wobei das Schweißergebnis, insbesondere die Güte der Schweißnaht, hinsichtlich ihrer Reproduzierbarkeit zu wünschen übrig läßt. Darüber hinaus erfordern die zur Durchführung zum Einsatz kommenden Orbitalschweißvorrichtungen spezielle Stromquellen, die insbesondere beim sektionsweisen Schweißen der Rundnaht nicht einfach zu handhaben sind und spezielle Kenntnisse und Übung des Bedieners erfordern.

Die Kompliziertheit des vorgenannten bekannten Verfahrens begünstigt keinesfalls eine Verbreitung überwiegend geschweißter molchbarer Rohrleitungen. Da jedoch aus ökonomischen und ökologischen Gründen das Molchen von Rohrleitungen, beispielsweise zur Zurückgewinnung hochwertiger Produkte einerseits und Minimierung des Reinigungsmittelbedarfs im Zuge einer Reinigung dieser Rohrleitungen andererseits, zunehmend an Bedeutung gewinnt, werden heute, da die Qualität der Schweißnähte in ihrem Wurzelbereich zu wünschen übrig läßt, die zu molchenden Rohrleitungen noch zu einem sehr hohen Anteil mit Flanschverbindungen ausgestattet. Letztere sind jedoch relativ aufwendig und damit teuer, so daß das Bedürfnis besteht, sie durch molchbare Schweißverbindungen zu ersetzen.

Aus der **US 4 645 902 A,** insbesondere Figur 3, ist ein Verfahren für das Lichtbogenschweißen einer vertikal orientierten in sich geschlossenen Naht mit zweidimensionalem Verlauf beschrieben, bei dem die Naht aus zwei Steignähten hergestellt wird, die im Bereich des tiefsten Punkts der Naht beginnen und im Bereich des höchsten Punkts der Naht sich überlappen. Der in diesem Zusammenhang vorgeschlagenen automatisch arbeitenden Orbitalschweißvorrichtung wird dabei Zusatzwerkstoff in Form eines Drahtes zugeführt. Zwar begünstigt das bekannte Verfahren aufgrund der bei der Herstellung der Naht zur Anwendung kommenden beiden gegenläufigen Steignähte eine für molchbare Rohrleitungen geeignete Wurzelausformung in jenen Bereichen der Naht, die als weniger kritisch anzusehen sind, jedoch kann das bekannte Verfahren die hinlänglich bekannten Nachteile wie sogenannter Wurzeldurchhang vorzugsweise im oberen und unteren Bereich der Naht (im unteren Bereich auch als Wurzelrückfall bezeichnet) sowie merkliche Wurzelansätze nicht vermeiden.

Es ist Aufgabe der vorliegenden Erfindung, ein Verfahren der gattungsgemäßen Art zu schaffen, das einfach zu handhaben ist und mit dessen Anwendung an keiner Stelle des gesamten Nahtverlaufs ein wurzelseitiges Durchhängen der Naht auftritt.

Aus der **NL-A-8 003 720** ist weiterhin ein Verfahren zum Verschweißen von horizontal oder nahezu horizontal liegenden nicht drehbaren Rohren bekannt, bei dem unter Verwendung von Schutzgas und nichtabschmelzender Elektrode und ohne oder mit Zusatzwerkstoff eine in sich geschlossene Naht aus zwei Steignähten hergestellt wird, wobei letztere im Bereich des tiefsten Punktes der Naht beginnen und im Bereich des höchsten Punktes enden. Dabei wird die Schweißung im Bereich des tiefsten und des höchsten Punktes jeweils ein Stück weit überlappend ausgeführt, wobei sich zumindest die Überlappung im oberen Bereich beiderseits des höchsten Punktes erstreckt.

Zur Lösung der oben genannten Aufgabe wird der Innendruck der Rohre, abhängig von der Schweissposition während des Schweissvorganges geändert.

Diese Aufgabe wird durch die Merkmale des Anspruchs 1 gelöst. Vorteilhafte Ausgestaltungen des vorgeschlagenen Verfahrens sind Gegenstand der Unteransprüche.

Das vorgeschlagene Verfahren macht von der Erkenntnis Gebrauch, daß aufsteigend geschweißte Nähte, sog. Steignähte, zu einer im Hinblick auf die Anwendung eines Molches in der Rohrleitung geeigneten Wurzelausformung führen. Aus diesem Grunde wird die zu schweißende zweidimensionale, in sich geschlossene Naht N_{0,} eine Rundnaht, während des Schweißvorganges in eine im wesentlichen vertikal orientierte Ebene verbracht und in dieser Position aus zwei Steignähten N₁ und N₂ hergestellt, die im Bereich des tiefsten Punkts der Naht beginnen und im Bereich des höchsten Punkts der Naht sich überlappen. Um an den Übergangsstellen zwischen der ersten und der zweiten Steignaht eine ansatzlose Wurzelschweißung zu erreichen, wird, wie dies das Verfahren in an sich bekannter Weise vorschlägt, die erste Steignaht N₁ ausgehend vom tiefsten Punkt der Naht um ein Stück über den höchsten Punkt der Naht hinweg ausgeführt. Anschließend wird die zweite Steignaht N₂ ausgehend vom tiefsten Punkt der Naht ausgeführt, bis die erste Steignaht N₁ ein Stück weit überschweißt ist, wobei die zweite Steignaht N₂ vor dem höchsten Punkt der Naht endet. Um auch am tiefsten Punkt der Naht, der anderen Übergangsstelle zwischen den beiden Steignähten N₁ und N₂, eine ansatzlose Wurzelausbildung zu erreichen, schlägt das Verfahren hier vor, daß der zweiten Steignaht N₂ eine Vorheizstrecke H vorgeordnet ist, die sich über einen den tiefsten Punkt benachbarten Anfangsbereich der ersten Steignaht N₁ erstreckt.

Das vorgeschlagene Verfahren sieht in zwei alternativen Ausführungsvarianten vor, daß der Schweißstrom nach dem Überschweißen der ersten (N₁) durch die zweite Steignaht (N₂) auf dem weiteren Weg der Elektrode zum höchsten Punkt (T) entweder augenblicklich oder allmählich abgesenkt wird.

Besonders zufriedenstellende Schweißergebnisse werden erzielt, wenn sich gemäß einer weiteren vorteilhaften Ausgestaltung des Verfahrens die erste Steignaht N₁ um etwa ein Zwölftel der gesamten Länge der Naht N₀ hinter den höchsten Punkt T hinweg erstreckt, weiterhin die zweite Steignaht N₂ den den höchsten Punkt T übergreifenden Teil der ersten Steignaht N₁ um etwa die Hälfte diese Teils überschweißt und darüber hinaus die Vorheizstrecke H etwa ein Sechstel der gesamten Länge der Naht N₀ lang ist.

Um in allen Bereichen der Schweißnaht eine einwandfreie Wurzelausbildung sicherzustellen, die den hohen Anforderungen gerecht wird, die insbesondere an molchbare Rohrleitungen gestellt werden, sieht das Verfahren weiterhin vor, daß der Schweißstrom (I₁; I₂) wegabhängig gesteuert wird.

Es hat sich als vorteilhaft erwiesen, um eine einwandfreie Ausbildung der Wurzel im besonders problematischen oberen Bereich der Steignähte (N₁; N₂) sicherzustellen, wenn der Schweißstrom (I₁; I₂) jeweils im oberen Bereich der Steignaht (N₁; N₂) kleiner als im jeweiligen unteren Bereich ist.

Das vorgeschlagene Verfahren kann mit den üblichen Orbitalschweißeinrichtungen durchgeführt werden, wobei letztere in einer bevorzugten Ausstattung mit einer normalen, für das Lichtbogenschweißen unter Verwendung von Schutzgas und nichtabschmelzender Elektrode üblicherweise verwendeten Schweißstromquelle arbeitet. Es sind vom Bediener lediglich die beiden sich im oberen Bereich der Naht N₀ überlappenden und am tiefsten Punkt B ineinander übergehenden Steignähte auszuführen, wobei in einer weiteren bevorzugten Ausgestaltung des vorgeschlagenen Verfahrens die Schweißgeschwindigkeit wegabhängig, d.h. von der jeweiligen Position der Elektrode in bezug auf die Lage der Schweißnaht bestimmt, gesteuert wird.

Beste Schweißergebnisse bezüglich der Wurzelausbildung werden erreicht, wenn die Schweißgeschwindigkeit v₂ im Bereich der zweiten Steignaht N₂, wobei letztere, zeitlich gesehen, im Anschluß an die erste Steignaht N₁ hergestellt wird, größer als die jeweils entsprechende Schweißgeschwindigkeit v₁ im Bereich der ersten Steignaht N₁ ist.

Die Wurzelausbildung der Schweißnaht wird im Sinne der der Erfindung zugrunde liegenden Aufgaben positiv beeinflußt, wenn das beim Lichtbogenschweißen verwendete Schutzgas aus einem Gemisch aus Argon und Wasserstoff besteht, wobei der Wasserstoffanteil 2 bis 6 Vol.-%, vorzugsweise 5 Vol.-%, beträgt.

Besonders problematisch ist die Ausbildung der Wurzel im Bereich des höchsten Punktes T der Naht N₀. Um auch hier eine Wurzelausbildung im Sinne der gestellten Aufgabe zu erreichen, die mit jener in den übrigen Bereichen der Naht qualitativ vergleichbar ist, wird das Verfahren gemäß der Erfindung, entsprechend einem weiteren Vorschlag, auf rechtwinklig zur Rohrachse abgelängte Rohrenden angewendet, wobei die miteinander zu verschweißenden Rohrenden im Bereich des höchsten Punktes T jeweils im Wurzelbereich der Naht N₀ angefast sind. Diese Anfasung erstreckt sich, annähernd symmetrisch zum höchsten Punkt T, auf einer Länge von insgesamt etwa einem Sechstel der Länge der Naht N₀, und sie besitzt vorzugsweise eine axiale Länge von 0,5 mm und eine gegen die Rohrachse gemessene Anschrägung von 45 ° (Fase 0,5 x 45 °).

Das vorgeschlagene Verfahren wird nachfolgend anhand der Zeichnung erläutert. Es zeigen
- **Figur 1**: in schematischer Darstellung und im Rahmen eines Polarkoordinatensystems die Abfolge der vorgeschlagenen Verfahrensschritte zur Herstellung einer Rundnaht und
- **Figur 2**: ebenfalls in schematischer Darstellung die einzelnen Verfahrensschritte gemäß Figur 1, wobei die jeweiligen Umfangslängen der Rundnaht abgewickelt und linear aufgetragen sind.

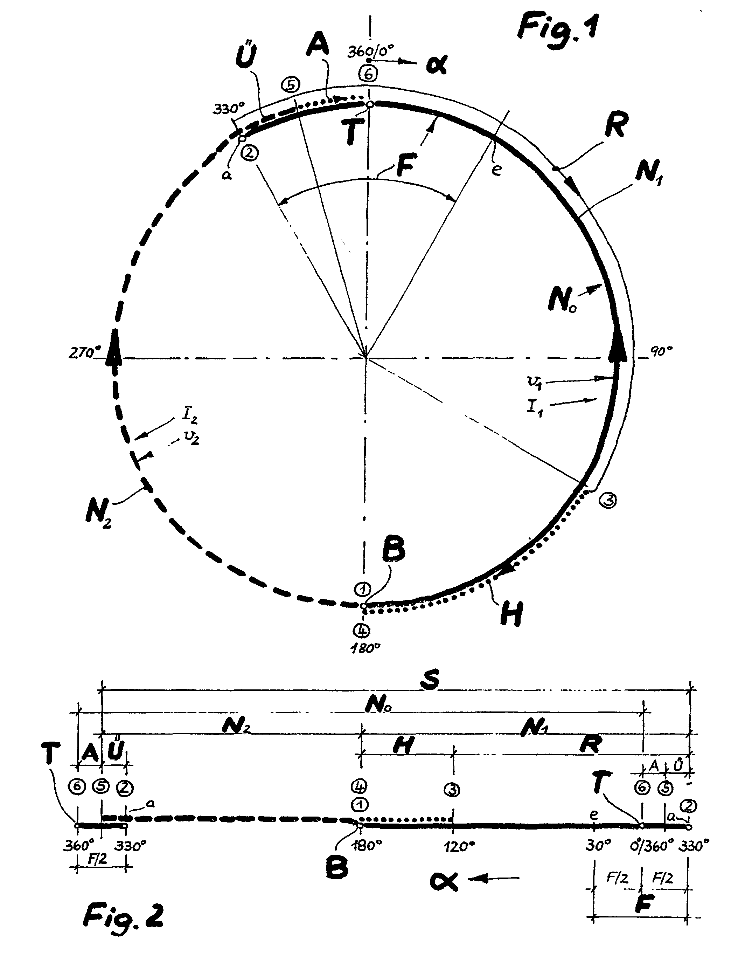

Eine zweidimensionale, in sich geschlossene Naht N₀ (**Figur 1**), eine sogenannte Rundnaht, setzt sich aus zwei Steignähten N₁ und N₂ zusammen. Die erste Steignaht N₁ wird von einem tiefsten Punkt B der Naht N₀, der mit Position 1 gekennzeichnet ist, geschweißt, und sie erstreckt sich, bezogen auf die dargestellte Lage, entgegen dem Uhrzeigersinn bis zu einer Position 2, so daß sich die erste Steignaht N₁ ein Stück über einen höchsten Punkt T der Naht N₀ hinweg erstreckt. Zur quantitativen Definition der einzelnen Positionen ist in Figur 1 ein Winkel α eingeführt, der seinen Nullpunkt im höchsten Punkt T besitzt. Es hat sich als vorteilhaft herausgestellt, wenn sich die erste Steignaht N₁ um etwa ein Zwölftel der gesamten Länge der Naht N₀ über den höchsten Punkt T hinweg erstreckt. Dies bedeutet, daß die Position 2 bei einem Winkel α = 330° oder α = - 30° liegt. Sobald die Position 2 erreicht ist, wird der Schweißstrom abgesenkt, und die Elektrode wird anschließend über einen Rücklauf R zu einer Position 3 zurückgeführt. Diese liegt vorzugsweise bei etwa einem Sechstel der gesamten Länge der Naht N₀ vor dem tiefsten Punkt B, so daß die Lage der Position 3 mit α = 120° definiert ist.

Die Position 3 markiert den Beginn einer Vorheizstrecke H, die sich bis zum tiefsten Punkt B erstreckt und auf der die bereits ausgeführte erste Steignaht N₁ vorgewärmt und vorgeheizt wird, so daß die zweite Steignaht N₂, die in einer Position 4 bei α = 180° beginnt, die Wurzel an dieser Stelle ansatzlos erfaßt. Die zweite Steignaht N₂ überschweißt die in Position 2 bei α = 330° endende erste Steignaht N₁ um ein Stück weit und endet in einer Position 5. Zweckmäßigerweise beträgt die diesbezügliche Überschweißlänge Ü etwa die Hälfte der Länge der Steignaht N₁ zwischen Position 2 und dem höchsten Punkt T. Beginnend von Position 5 (ca. α = 345°) wird der Schweißstrom auf dem weiteren Weg der Elektrode zum höchsten Punkt T (Position 6; α = 360° bzw. 0°) entweder augenblicklich oder allmählich abgesenkt.

Beste Schweißergebnisse werden erzielt, wenn der Schweißstrom I₁ für die Steignaht N₁ und der Schweißstrom I₂ für die Steignaht N₂ wegabhängig gesteuert werden, wobei der Schweißstrom I₁, I₂ jeweils im oberen Bereich der Steignaht N_{1,} N₂ kleiner als im jeweiligen unteren Bereich ist.

Gemäß einer zweiten Verfahrensvarianten bleibt der Schweißstrom über die gesamte Länge der ersten und der zweiten Steignaht N₁ und N₂ konstant. Im Bereich der zweiten Steignaht N₂ ist die Schweißgeschwindigkeit v₂ größer als die jeweils entsprechende Schweißgeschwindigkeit v₁ im Bereich der ersten Steignaht N₁, wobei die Schweißgeschwindigkeiten v₁ und v₂ wegabhängig, d. h. in Abhängigkeit von der jeweiligen Position der Elektrode gesteuert werden

Um einen Durchhang der Wurzel auch im Bereich des höchsten Punktes T sicher zu verhindern, werden die miteinander zu verschweißenden Rohrenden dort jeweils im Wurzelbereich der Naht N₀ angefast, wobei sich die Fase F, annähernd symmetrisch zum höchsten Punkt T, auf einer Länge von insgesamt etwa einem Sechstel der Naht N₀ zwischen einem Anfangspunkt a und einem Endpunkt e erstreckt und vorzugsweise eine Länge von 0,5 mm und eine gegen die Rohrachse gemessene Anschrägung von 45° besitzt (Fase 0,5 x 45°).

Aus **Figur 2** sind die in Figur 1 anhand des vorgeschlagenen Verfahrens definierten und erklärten Umfangslängen als gestreckte Längen linear dargestellt. Man erkennt, daß sich die herzustellende Naht N₀, eine Rundnaht, zwischen α = 0° und α = 360° erstreckt und, ausgehend vom tiefsten Punkt B bei α = 180°, einerseits aufsteigend zu α = 0° und darüber hinaus bis zu α = 330° (erste Steignaht N₁) und, andererseits ebenfalls aufsteigend bis zu α = 345° (zweite Steignaht N₂), ausgeführt wird. Der Überlappungsbereich der ersten Steignaht N₁ mit der zweiten Steignaht N₂ ist mit Ü gekennzeichnet. Er liegt zwischen α = 330° und α = 345°. Der Bereich der Stromabsenkung zwischen Position 5 und dem höchsten Punkt T ist mit A gekennzeichnet und liegt zwischen α = 345° und α = 360°. Die Vorheizstrecke H befindet sich zwischen α = 120° und α = 180°. Die erste Steignaht N₁ wird um ein Stück über den höchsten Punkt T der Naht hinweg ausgeführt (von α = 0° bis α = 330° (rechter Teil der Figur 2) bzw. α = 360° bis α = 330° (in einer sich wiederholenden Darstellung dieses Bereiches im linken Teil der Figur 2)). Der gesamte Schweißweg S setzt sich aus den Steiglängen N₁ und N₂ zusammen, und er übersteigt die nominelle Länge der Naht N₀ um die Länge der Überschweißung Ü. Darüber hinaus ist zu erkennen, daß die Anfasung F im Bereich des höchsten Punktes T um jeweils die Länge F/2 beiderseits diese Punktes vorgesehen ist.

Die vorstehenden quantitativen Angaben bezüglich der Bemessung der einzelnen Längen bzw. Winkel sind Richtwerte, die im konkreten Anwendungsfall in Abhängigkeit von der Wandstärke des Rohres und dem Rohrnenndurchmesser ggf. noch mit dem Ziel einer Optimierung des Schweißergebnisses modifiziert und geringfügig angepaßt werden können. Entscheidend für das angestrebte Schweißergebnis ist, daß gemäß dem vorgeschlagenen Verfahren die Naht aus zwei Steignähten N₁ und N₂ hergestellt wird, die im Bereich des tiefsten Punkts der Naht beginnen und im Bereich des höchsten Punkts der Naht sich überlappen, daß im Hinblick auf ein ansatzloses Erfassen der Wurzel beim Übergang von der ersten Steignaht N₁ zur zweiten Steignaht N₂ letzterer eine Vorheizstrecke H vorgeordnet ist, die sich über einen dem tiefsten Punkt B benachbarten Anfangsbereich der ersten Teilnaht N₁ erstreckt, und daß die erste Steignaht N₁ ausgehend vom tiefsten Punkt der Naht um ein Stück über den höchsten Punkt T der Naht N₀ hinweg ausgeführt wird und dort ein Stück weit von der zweiten Steignaht N₂ überschweißt wird.

## Patentansprüche

1. Verfahren für das Lichtbogenschweißen einer vertikal orientierten in sich geschlossenen Naht (N₀) mit zweidimensionalem Verlauf, insbesondere für Rundnähte molchbarer Rohrleitungen, unter Verwendung von Schutzgas und nicht-abschmelzender Elektrode und ohne Verwendung von Zusatzwerkstoff, bei dem die Naht aus zwei Steignähten (N1, N2) hergestellt wird, die im Bereich des tiefsten Punkts der (B) Naht beginnen und im Bereich des höchsten Punkts der Naht (T) sich überlappen, wobei die erste Steignaht (N₁) ausgehend vom tiefsten Punkt der Naht (B) um ein Stück über den höchsten Punkt der Naht (T) hinweg ausgeführt wird, **dadurch gekennzeichnet,**
• **daß** die zweite Steignaht (N₂) ausgehend vom tiefsten Punkt der Naht (B) ausgeführt wird, bis die erste Steignaht (N₁) ein Stück weit überschweißt ist, wobei die zweite Steignaht (N₂) vor dem höchsten Punkt der Naht (T) endet, und
• **daß** der zweiten Steignaht (N₂) eine Vorheizstrecke (H) vorgeordnet ist, die sich über einen dem tiefsten Punkt (B) benachbarten Anfangsbereich der ersten Steignaht (N₁) erstreckt.

2. Verfahren nach Anspruch 1, **dadurch gekennzeichnet, daß** der Schweißstrom nach dem Überschweißen der ersten (N₁) durch die zweite Steignaht (N₂) auf dem weiteren Weg der Elektrode zum höchsten Punkt (T) augenblicklich abgesenkt wird.

3. Verfahren nach Anspruch 1, **dadurch gekennzeichnet, daß** der Schweißstrom nach dem Überschweißen der ersten (N₁) durch die zweite Steignaht (N₂) auf dem weiteren Weg der Elektrode zum höchsten Punkt (T) allmählich abgesenkt wird.

4. Verfahren nach einem der Ansprüche 1 bis 3, **dadurch gekennzeichnet, daß** sich die erste Steignaht (N₁) um etwa ein Zwölftel der gesamten Länge der Naht (N₀) hinter den höchsten Punkt (T) hinweg erstreckt, daß die zweite Steignaht (N₂) den den höchsten Punkt (T) übergreifenden Teil der ersten Steignaht (N₁) um etwa die Hälfte dieses Teils überschweißt, und daß die Vorheizstrecke (H) etwa ein Sechstel der gesamten Länge der Naht (N₀) lang ist.

5. Verfahren nach einem der Ansprüche 1 bis 4, **dadurch gekennzeichnet, daß** der Schweißstrom (I₁) für die Steignaht (N₁) und der Schweißstrom (I₂) für die Steignaht (N₂) wegabhängig gesteuert werden.

6. Verfahren nach Anspruch 5, **dadurch gekennzeichnet, daß** der Schweißstrom (I₁; I₂) jeweils im oberen Bereich der Steignaht (N₁; N₂) kleiner als im jeweiligen unteren Bereich ist.

7. Verfahren nach einem der Ansprüche 1 bis 6, **dadurch gekennzeichnet, daß** die Schweißgeschwindigkeit v wegabhängig gesteuert wird.

8. Verfahren nach einem der Ansprüche 1 bis 7, **dadurch gekennzeichnet, daß** die Schweißgeschwindigkeit v₂ im Bereich der zweiten Steignaht (N₂) größer als die jeweils entsprechende Schweißgeschwindigkeit v₁ im Bereich der ersten Steignaht (N₁) ist.

9. Verfahren nach einem der Ansprüche 1 bis 8, **dadurch gekennzeichnet, daß** das Schutzgas aus einem Gemisch aus Argon und Wasserstoff besteht, wobei der Wasserstoffanteil 2 bis 6 Vol.-%, vorzugsweise 5 Vol.-%, beträgt.

10. Verfahren nach einem der Ansprüche 1 bis 9, **dadurch gekennzeichnet, daß** die Rundnaht zwei rechtwinklig zur Achse der Rohrleitung abgelängte Rohrenden verbindet und die miteinander zu verschweißenden Rohrenden im Bereich des höchsten Punktes (T) jeweils im Wurzelbereich der Naht angefast werden, wobei sich die Fase, annähernd symmetrisch zum höchsten Punkt (T), auf einer Länge von insgesamt etwa einem Sechstel der Länge der Naht (N₀) erstreckt und vorzugsweise eine axiale Länge von 0,5 mm und eine gegen die Rohrachse gemessene Anschrägung von 45° besitzt (Fase 0,5 x 45°).

## Claims

1. A method for arc welding of a vertically oriented seam which is closed into itself and has a two-dimensional profile, especially for circumferential seams of scrapable pipes, using protective gas and non-fusible electrode and without using filler material, wherein the seam is made of two uphand seams (N1, N2) which begin in the region of the lowest point of the seam and overlap in the region of the highest point of the seam, wherein the first uphand seam (N₁) starting from the lowest point of the seam is made with a piece above the highest point of the seam, **characterised in that**
• the second uphand seam (N₂) is made starting from the lowest point of the seam until the first uphand seam (N₁) is overwelded by a piece, wherein the second uphand seam (N₂) ends before the highest point of the seam and
• the second uphand seam (N₂) is preceded by a preheating section (H) which extends over an initial region of the first uphand seam (N₁) adjacent to the lowest point.

2. The method according to Claim 1, **characterised in that** the welding current is momentarily reduced after overwelding of the first seam (N₁) by the second uphand seam (N₂) on the subsequent path of the electrode to the highest point (T).

3. The method according to Claim 1, **characterised in that** the welding current is gradually reduced after overwelding of the first seam (N₁) by the second uphand seam (N₂) on the subsequent path of the electrode to the highest point (T).

4. The method according to one of Claims 1 to 3, **characterised in that** the first uphand seam (N₁) extends by approximately one twelfth of the total length of the seam (N₀) behind the highest point (T), that the second uphand seam (N₂) overwelds the part of the first uphand seam (N₁) overlapping the highest point (T) by approximately half this part and that the length of the preheating section (H) is approximately one sixth of the total length of the seam (N₀).

5. The method according to one of Claims 1 to 4, **characterised in that** the welding current (I₁) for the uphand seam (N₁) and the welding current (I₂) for the uphand seam (N₂) are controlled path-dependently.

6. The method according to Claim 5, **characterised in that** the welding current (I₁; I₂) in the upper region of the welded seam (N₁; N₂) respectively is smaller than that in the respective lower region.

7. The method according to one of Claims 1 to 6, **characterised in that** the welding speed v is controlled path-dependently.

8. The method according to one of Claims 1 to 7, **characterised in that** the welding speed v₂ in the region of the second uphand seam (N₂) is higher than the respectively corresponding welding speed (v₁) in the region of the first uphand seam (N₁).

9. The method according to one of Claims 1 to 8, **characterised in that** the protective gas consists of a mixture of argon and hydrogen wherein the hydrogen fraction is 2-6 vol.%, preferably 5 vol.%.

10. The method according to one of Claims 1 to 9, **characterised in that** the circumferential seam joins two pipe ends cut to length at right angles to the axis of the pipe and the pipe ends to be welded together in the region of the highest point (T) are each grasped in the root region of the seam, wherein the chamfer extends approximately symmetrically to the highest point (T) over a total length of approximately one sixth of the length of the seam (N₀) and preferably has an axial length of 0.5 mm and a chamfering angle of 45° measured with respect to the pipe axis (chamfer 0.5 x 45°).

## Revendications

1. Procédé pour le soudage à l'arc d'un cordon de soudure orienté verticalement fermé sur lui-même à extension bidimensionnelle, en particulier pour des cordons circulaires de canalisations ramonables, en utilisant du gaz protecteur et une électrode non fusible et sans utilisation de matière supplémentaire, dans lequel le cordon est fabriqué à partir de deux cordons montants (N₁, N₂), qui commencent dans la zone du point le plus profond du cordon et se recouvrent dans la zone du point le plus élevé du cordon, le premier cordon montant (N₁) étant réalisé à partir du point le plus profond du cordon autour d'un tronçon au dessus du point le plus élevé du cordon,
**caractérisé en ce que**
• le deuxième cordon montant (N₂) est réalisé à partir du point le plus profond du cordon jusqu'à ce que le premier cordon montant (N₁) soit recouvert de soudure sur un tronçon, le deuxième cordon montant (N₂) se terminant avant le point le plus élevé du cordon, et
• en amont du deuxième cordon montant (N₂), se situe une section de pré-chauffage (H) qui s'étend sur une zone de début du premier cordon montant (N₁) voisine du point le plus profond.

2. Procédé selon la revendication 1, **caractérisé en ce que** le courant de soudage est, après recouvrement par soudure du premier (N₁) par le deuxième cordon montant (N₂), diminué brusquement au cours de la course de l'électrode poursuivie vers le point le plus élevé (T).

3. Procédé selon la revendication 1, **caractérisé en ce que** le courant de soudage est, après recouvrement par soudure du premier (N₁) par le deuxième cordon montant (N₂), diminué progressivement pendant l'autre course de l'électrode vers le point le plus élevé (T).

4. Procédé selon une des revendications 1 à 3, **caractérisé en ce que** le premier cordon montant (N₁) s'étend d'environ un douzième de la longueur totale du cordon (N₀) derrière le point le plus élevé (T), que le deuxième cordon montant (N₂) recouvre de soudure la partie mordant sur le point le plus élevé (T) du premier cordon montant (N₁) d'environ la moitié de cette partie et que la section de pré-chauffage (H) a une longueur d'environ un sixième de la longueur totale du cordon (N₀).

5. Procédé selon une des revendications 1 à 4, **caractérisé en ce que** le courant de soudage (I₁) pour le cordon montant (N₁) et le courant de soudage (I₂) pour le cordon montant (N₂) sont commandés en fonction de la course.

6. Procédé selon la revendication 5, **caractérisé en ce que** le courant de soudage (I_{1;} I₂) est respectivement plus petit dans la partie supérieure du cordon montant (N_{1;} N₂) que dans la partie inférieure respective.

7. Procédé selon une des revendications 1 à 6, **caractérisé en ce que** la vitesse de soudage v est commandée en fonction de la course.

8. Procédé selon une des revendications 1 à 7, **caractérisé en ce que** la vitesse de soudage v₂ est supérieure dans la zone du deuxième cordon montant (N₂) à la vitesse de soudage v1 respectivement correspondante dans la zone du premier cordon montant (N₁).

9. Procédé selon une des revendications 1 à 8, **caractérisé en ce que** le gaz protecteur consiste en un mélange d'argon et d'hydrogène, la teneur en hydrogène étant de 2 à 6 % en volume, de préférence de 5 % en volume.

10. Procédé selon une des revendications 1 à 9, **caractérisé en ce que** le cordon circulaire relie deux extrémités de tuyau sectionnées en angle droit par rapport à l'axe de la canalisation et que les extrémités de tuyau à souder ensemble dans la zone du point le plus élevé (T) sont respectivement chanfreinées dans la zone de racine du cordon, le chanfrein, pratiquement symétrique au point le plus élevé (T), s'étendant sur une longueur d'environ un sixième au total de la longueur du cordon (N₀) et possédant de préférence une longueur axiale de 0,5 mm et une oblicité de 45° mesurée contre l'axe du tuyau (chanfrein 0,5 x 45°).
